# EUROPÄISCHE PATENTSCHRIFT

(11) **EP 1 316 376 B1**
(45) Veröffentlichungstag und Bekanntmachung des Hinweises auf die Patenterteilung: **20.12.2006**
(21) Anmeldenummer: 02405990.9
(22) Anmeldetag: 18.11.2002
(51) Int. Cl.: C23C 30/00

(54) **Gesteinsbohrer**
Rock drill
Foret à roche

(30) Priorität: 30.11.2001 DE 10159014
(43) Veröffentlichungstag der Anmeldung: 04.06.2003
(73) Patentinhaber: HILTI Aktiengesellschaft, 9494 Schaan (LI)
(72) Erfinder: Hauptmann, Udo, 86899 Landsberg/Lech (DE); Pröls, Tim, 80638 München (DE); Assel, Thorsten, 86899 Landsberg/Lech (DE)
(74) Vertreter: Wildi, Roland

(56) Entgegenhaltungen:
- US-A- 4 904 130
- US-A- 5 303 574
- US-A1- 2001 023 783

## Beschreibung

Die Erfindung bezeichnet einen, zumindest teilweise drehend und schlagend angetriebenen Gesteinsbohrer zum Abtrag von Gestein wie Beton oder Mauerwerk, gemäß dem Oberbegriff des Anspruchs 1. Ein solches Bohrer ist aus US 2001/023783 A1 bekannt.

Derartige Gesteinsbohrer bestehen aus einem länglichen wendelförmigen Schaft, welcher an einem Ende ein Einsteckende zur Aufnahme in ein antreibendes Werkzeuggerät und am gegenüberliegenden Ende einen Werkzeugkopf mit Schneiden aus Hartstoff aufweist. Bei Gesteinsbohrern mit Nebenschneiden sind zwischen den, den Hauptschneiden zugeordneten, Hauptwendeln häufig radial kleinere Nebenwendeln vorhanden.

Durch den direkten Kontaktverschleiss mit der Bohrlochwandung beim Abtrag von hartem Gestein nutzt sich der Werkzeugkopf und die Wendel radial ab, wodurch dieser radiale Verschleiss ein Mass für die Nutzungsdauer des Gesteinsbohrers ist.

Nach der DE1965131A1 weist ein Gesteinsbohrer im Wendelrücken umfängliche Rillen oder achsparallele Nuten bestimmter Tiefe als Verschleissmarkierung für den direkten Kontaktverschleiss mit der Bohrlochwandung auf. Nach der DE19859624 sind bei einem Gesteinsbohrer derartige Verschleissmarkierungen im Wendelrücken mit Farbe ausgefüllt, um die hinreichende Resttiefe der Verschleissmarkierung optisch sichtbar anzuzeigen. Der geringe tolerierbare radiale Verschleiss erschwert die Bestimmung des Verschleisses.

Nach der US4904130 weist ein Gesteinsbohrer im Nutengrund eine farbige, streifenförmige Beschichtung als kennzeichnende Markierungen für die Bohrtiefe auf, welche dem Nutverschleiss durch das abgetragene Material unterworfen und radial verlaufend angeordnet sind.

Die Aufgabe der Erfindung besteht in der einfachen Realisierung einer langlebigen und sensiblen Verschleissmarkierung für Gesteinsbohrer mit Nebenwendeln.

Die Aufgabe wird im wesentlichen durch die Merkmale der unabhängigen Ansprüche gelöst. Vorteilhafte Weiterbildungen ergeben sich aus den Unteransprüchen.

Im wesentlichen weist ein zumindest teilweise drehend und schlagend angetriebener Gesteinsbohrer zum Abtrag von Gestein einen länglichen, wendelförmigen Schaft, welcher an einem Ende ein Einsteckende und am gegenüberliegenden Ende einen Werkzeugkopf mit Schneiden aus Hartstoff aufweist, wobei der wendelförmige Schaft zumindest teilweise mit einer farbigen Schicht beschichtet ist und die farbige Schicht innerhalb der Wendelnut längs dieser eine länglich verlaufende Verschleissmarkierung ausbildet.

Die farbige Schicht innerhalb der Wendelnut ist ebenso wie die gesamte Wendelnut dem abrasiven Verschleiss durch das abgetragene Material ausgesetzt, nicht jedoch dem direkten Kontaktverschleiss mit der Bohrlochwandung, wodurch dieser langlebig und bedingt durch die lange Wendelnut sehr sensibel ist.

Vorteilhaft ist ein zwischen den Hauptwendeln angeordneter, radial kleinerer Nebenwendel auf dem Nebenwendelrücken mit einer farbigen Schicht beschichtet, wodurch durch den beschichtungsfreien Nutengrund die Förderung des abgetragenen Materials nicht eingeschränkt wird. Die gut sichtbar konstruktiv abgesetzt angeordnete farbige Schicht ist nicht dem direkten Kontaktverschleiss mit der Bohrlochwandung ausgesetzt, da die Nebenwendelrücken inklusive der farbigen Schicht radial nicht an den durch die Hauptwendelrücken gebildeten Hüllkreis heranreichen.

Vorteilhaft werden mehrere verschiedene Nebenwendelrücken mit verschiedenenfarbigen, unterschiedlich verschleissenden Schichten beschichtet, wodurch die Sensibilität weiter erhöht wird.

Vorteilhaft ist die länglich verlaufende Verschleissmarkierung durchgehend streifenförmig ausgebildet, wodurch der Verschleiss mittels der fehlenden Länge der Verschleissmarkierung stetig ablesbar ist.

Die Erfindung wird bezüglich eines vorteilhaften Ausführungsbeispiels näher erläutert mit einer Figur als Gesteinsbohrer.

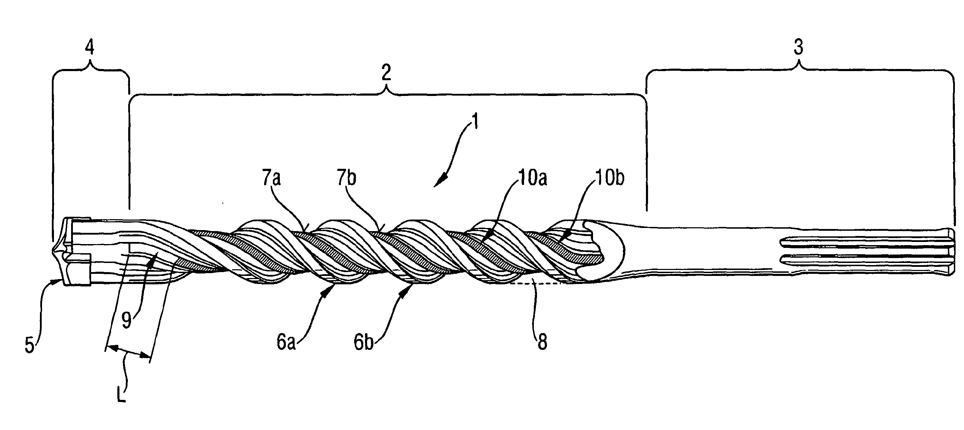

Nach der Figur weist ein zumindest teilweise drehend und schlagend angetriebener Gesteinsbohrer 1 einen länglichen, wendelförmigen Schaft 2, welcher an einem Ende aus einem Einsteckende 3 und am gegenüberliegenden Ende aus einem Werkzeugkopf 4 mit Schneiden 5 aus Hartstoff besteht, auf, wobei eine, längs zu einem zweigängigen Hauptwendelrücken 6a, 6b verlaufende, längliche farbige Schicht 7a, 7b innerhalb der Wendelnut 8 angeordnet ist, deren abgetragene Länge L als Verschleissmarkierung 9 dient.

Ein jeweils zwischen dem zweigängigen Hauptwendelrücken 6a, 6b angeordneter, radial kleinerer Nebenwendelrücken 10a, 10b ist radial aussen mit verschieden verschleissfesten und verschieden farbigen Schichten 7a, 7b beschichtet.

## Patentansprüche

1. Gesteinsbohrer zum Abtrag von Gestein mit einem länglichen, wendelförmigen Schaft (2), welcher an einem Ende ein Einsteckende (3) und am gegenüberliegenden Ende einen Werkzeugkopf (4) mit Schneiden (5) aus Hartstoff aufweist, wobei der wendelförmige Schaft (2) innerhalb der Wendelnut (8) ein bezüglich der Wendel (6) radial kleinerer Nebelwendelrücken (10a, 10b) aufweist, **dadurch gekennzeichnet, dass** nur die Nebelwendelrücken (10a, 10b) mit der farbigen Schicht (7a, 7b) beschichtet sind und die farbige Schicht eine länglich verlaufende Verschleissmarkierung (9) ausbildet.

2. Gesteinsbohrer nach Anspruch 1, **dadurch gekennzeichnet, dass** mehrere verschiedene Nebenwendelrücken (10a, 10b) mit verschiedenenfarbigen, unterschiedlich verschleissenden und farbigen Schichten (7a, 7b) beschichtet sind.

3. Gesteinsbohrer nach einem der vorherigen Ansprüche, **dadurch gekennzeichnet, dass** die länglich verlaufende Verschleissmarkierung (9) durchgehend streifenförmig ausgebildet ist.

## Claims

1. Stone drill for removing stone, with an elongated, helical shaft (2) that has an insertion end (3) at one end and, at the opposite end, has a tool head (4) with cutting edges (5) made of hard material, whereby the helical shaft (2) has, within the helical groove (8), a back of a secondary helix (10a, 10b) that is radially smaller than the helix (6), **characterized in that** only the backs of the secondary helices are coated with the coloured layer (7a, 7b) and the coloured layer forms an elongated abrasion marking (9) running lengthwise.

2. Stone drill in accordance with claim 1, **characterized in that** several different backs of secondary helices (10a, 10b) are coated with differently-coloured differently-abrading layers (7a, 7b).

3. Stone drill in accordance with one of the preceding claims, **characterized in that** the lengthwise abrasion marking (9) is in the form of a continuous strip.

## Revendications

1. Foret à roche pour percer la roche, comprenant une tige allongée hélicoïdale (2) qui comporte, à une extrémité, une extrémité d'insertion (3) et, à l'extrémité opposée, une tête d'outil (4) garnie de taillants (5) en substance dure, la tige hélicoïdale (2) comportant, à l'intérieur de la rainure hélicoïdale (8), un talon auxiliaire d'hélice (10a, 10b) radialement plus petit que l'hélice (6), **caractérisé en ce que** seuls les talons auxiliaires d'hélice (10a, 10b) sont revêtus de la couche colorée (7a, 7b), et la couche colorée forme un repère d'usure de conformation allongée (9).

2. Foret à roche selon la revendication 1, **caractérisé en ce que** plusieurs talons auxiliaires d'hélice différents (10a, 10b) sont revêtus de couches de différentes couleurs, de couleurs et d'usures différentes (7a, 7b).

3. Foret à roche selon une des revendications précédentes, **caractérisé en ce que** le repère d'usure de conformation allongée (9) est conçu sous la forme d'une bande sur toute sa longueur.
